# EUROPÄISCHE PATENTANMELDUNG

(11) **EP 2 039 585 A2**
(43) Veröffentlichungstag der Anmeldung: **25.03.2009**
(21) Anmeldenummer: 08015496.6
(22) Anmeldetag: 03.09.2008
(51) Int. Cl.: B62B 7/08

(54) **Kinder-Sportkarre**

(30) Priorität: 19.09.2007 DE 102007045068
(71) Anmelder: Otto Bock HealthCare IP GmbH & Co. KG, 37115 Duderstadt (DE)
(72) Erfinder: Kretschmer, Oliver, 74889 Sinsheim (DE); Wilke, Christian, 64668 Rimbach (DE); Christmann, Jürgen, 69245 Bammental (DE)
(74) Vertreter: Plöger, Jan Manfred

(57) **Zusammenfassung**

Die Erfindung betrifft eine Kinder-Sportkarre, insbesondere Kinderrehabilitations-Sportkarre, mit einem Gestell (12), das einen Vorderrahmen (14) mit mindestens einem Vorderrad (22) und einen Hinterrahmen (16) mit mindestens einem Hinterrad (28) umfasst, einer Schubstange (30) zum Schieben oder Ziehen der Sportkarre (10), einer Sitzaufnahme (36) zum Aufnehmen eines Sitzes und einem Zentralelement (38), das den Vorderrahmen (14), den Hinterrahmen (16) und die Schubstange (30) arretierbar verschwenkbar miteinander verbindet, ein Betätigungselement (42) zum Lösen des Zentralelements (38) und eine Schiebehülse (56) die eine Arretierstellung, in der der Vorderrahmen (14) drehfest mit dem Hinterrahmen (16) verbunden ist und eine Faltstellung, in der der Vorderrahmen (14) relativ zum Hinterrahmen (16) schwenkbar ist, besitzt. Erfindungsgemäß ist vorgesehen, dass das Zentralelement (38) mindestens ein Schiebeelement (82, 83) aufweist und die Schiebehülse (56) eine Führungsbahn (88) besitzt, die ausgebildet ist, um an dem Schiebeelement (82, 83) so abzugleiten, dass durch eine Drehung des Schiebeelements (82) relativ zu der Schiebehülse (56) um eine Zentralwelle (92) eine axiale Verschiebung der Schiebehülse (56) von der Arretierstellung in die Faltstellung bewirkbar ist.

## Beschreibung

Die Erfindung betrifft eine Kinder-Sportkarre, insbesondere eine Kinderrehabilitations-Sportkarre, mit a) einem Gestell, das (i) einen Vorderrahmen mit mindestens einem Vorderrad und (ii) einen Hinterrahmen mit mindestens einem Hinterrad umfasst, b) einer Schubstange zum Schieben oder Ziehen der Sportkarre, c) einer Sitzaufnahme zum Aufnehmen eines Sitzes und d) einem Zentralelement, das (i) den Vorderrahmen, den Hinterrahmen und die Schubstange arretierbar verschwenkbar miteinander verbindet, (ii) ein Betätigungselement zum Lösen des Zentralelements und (iii) eine Schiebehülse, die eine Arretierstellung, in der der Vorderrahmen drehfest mit dem Hinterrahmen verbunden ist und eine Faltstellung, in der der Vorderrahmen relativ zum Hinterrahmen schwenkbar ist, besitzt.

Eine derartige Kinder-Sportkarre, die auch als Buggy bezeichnet werden kann, ist beispielsweise aus der WO 2006/031115 A2 bekannt. Die dort beschriebene Kinder-Sportkarre kann hinsichtlich ihrer Position der Schubstange variiert werden. Um die Sportkarre leichter transportieren zu können, ist ein weiterer Mechanismus vorgesehen, um das Gestell, das die Räder hält, in einen gefalteten Zustand zu bringen. Nachteilig an der bekannten Sportkarre ist deren hohe mechanische Komplexität. Da insbesondere Bedienelemente wie Knöpfe leicht kaputt gehen, ist die bekannte Kinderkarre fehleranfällig.

Aus der US 2007/0164538 A1 und der EP 1 503 095 A1 sind Gelenke für Kinderwagen bekannt, die beide aber einen beträchtlichen Fertigungsaufwand mit sich bringen.

Der Erfindung liegt die Aufgabe zugrunde, eine Kinder-Sportkarre vorzuschlagen, die einfach zu fertigen ist.

Die Erfindung löst das Problem durch eine gattungsgemäße Kinder-Sportkarre, bei der das Zentralelement ein Schiebelement aufweist und die Schiebehülse eine Führungsbahn besitzt, die ausgebildet ist, um an dem Schiebeelement so abzugleiten, dass durch eine Drehung des Schiebelements relativ zu der Schiebehülse um eine Zentralwelle eine axiale Verschiebung der Schiebehülse von der Arretierstellung in die Faltstellung bewirkbar ist.

Vorteilhaft hieran ist, dass allein durch Drehen des Schiebeelements relativ zu der Schiebehülse, also durch Drehen des Schiebelements bei stillstehender Schiebehülse, durch Drehen der Schiebehülse bei stillstehenden Schiebelement oder bei gleichzeitigem gegensinnigem Drehen von Schiebeelement und Schiebehülse, die Schiebehülse von der Arretierstellung in die Fallstellung bringbar ist. Eine derartige Bewegung kann leicht beispielsweise durch die Schubstange ausgelöst werden, wenn das Schiebeelement oder die Schiebehülse an der Schubstange angeordnet sind. Beim Betrieb der Kinder-Sportkarre befindet sich die Schubstange in einer zur Horizontalen geneigten Position, so dass die Kinder-Sportkarre angenehm geschoben werden kann. Durch Bewegen der Schubstange beispielsweise über die Horizontale hinaus nach unten, kann die Schiebehülse in die Fallstellung gebracht werden. Auf diese Weise wird gegenüber der bekannten Kinder-Sportkarren ein Betätigungselement eingespart. Das erleichtert die Fertigung und führt zu geringeren Kosten. Gleichzeitig ist eine derartige Kinder-Sportkarre weniger störanfällig, da sie weniger von außen zu bedienende Teile besitzt.

Da auf gesonderte Betätigungselemente für den Faltmechanismus verzichtet werden kann, sinkt zudem die Gefahr einer Verschmutzung von beweglichen Teilen, die zu einem Funktionsversagen führen könnte. Weitere Vorteile sind die intuitive Bedienbarkeit und ein ansprechenderes, funktionelles Design.

Im Rahmen der folgenden Beschreibung wird auf Vorderräder und auf Hinterräder Bezug genommen. Es handelt sich hierbei jedoch um eine beliebige Definition, denn durch geeignetes Schwenken der Schubstange kann die Kinder-Sportkarre so verändert werden, dass sie mit den Hinterrädern voran geschoben werden kann.

Unter dem Merkmal, dass der Vorderrahmen relativ zum Hinterrahmen schwenkbar ist, ist insbesondere gemäß dem üblichen Sprachgebrauch zu verstehen, dass entweder der Vorderrahmen schwenkbar ist, der Hinterrahmen jedoch ruht, oder der Hinterrahmen schwenkbar ist, der Vorderrahmen jedoch ruht oder aber der Vorderrahmen und der Hinterrahmen schwenkbar sind.

Unter einem Betätigungselement wird insbesondere jede Vorrichtung der Kinder-Sportkarre verstanden, die per Hand betätigbar ist und mindestens zwei Positionen einnehmen kann, nämlich eine Ruhestellung eine Lösestellung. Das Betätigungselement ist vorteilhafterweise in die Ruhestellung vorgespannt, beispielsweise durch eine Feder, und kann per Hand in eine Lösestellung gebracht werden. Nur in der Lösestellung ist die Schubstange relativ zum Gestell um die Zentralwelle schwenkbar. Durch Loslassen des Betätigungselements wird die Schubstange in einer neuen Position retativ zum Gestell fixiert.

Unter einer Schiebehülse wird insbesondere ein Bauteil mit im Wesentlichen zylindermantelförmigem Grundkörper verstanden. Für die Funktion ist es vorteilhaft, jedoch nicht notwendig, dass der Zylindermantel vollständig geschlossen ist. Insbesondere ist der Wortbestandteil "Hülse" nicht dahingehend zu verstehen, dass stets ein anderes Objekt umhüllt ist.

Unter einer Führungsbahn wird insbesondere jegliche Struktur auf der Schiebehülse verstanden, die ausgebildet ist, um mit dem Schiebelement so zusammenzuwirken, dass ein Verschwenken von Schiebehülse und Schiebelement relativ zueinander zu einer axialen Verschiebung führt. Die Führungsbahn kann zumindest abschnittsweise durch eine Führungsbahn-Funktion beschrieben werden, die einer radialen Koordinate um die Zentralwelle eine Höhle entlang der Zentralwelle zuordnet. Diese Führungsbahn-Funktion ist bevorzugt stetig. Besonders bevorzugt ist sie zumindest abschnittsweise glatt, das heißt, stetig differenzierbar.

Gemäß einer bevorzugten Ausführungsform ist die Führungsbahn an einem Rand der Schiebehülse ausgebildet. Es ergibt sich so eine besonders einfache Konstruktion der Schiebehülse, die zudem auftretende Kräfte, die durch das Abgleiten des Schiebelements an der Schiebehülse auftreten, besonders gut aufnehmen kann.

Günstig ist es zudem die Führungsbahn an einem axial äußeren, dem Schiebelement zugewandten Rand der Schiebehülse auszubilden. Bevorzugt ist dabei, dass die Schiebehülse einen im Wesentlichen zylindermantelförmigen Grundkörper hat und die Führungsbahn an einer Stirnseite des Grundkörpers ausgebildet ist. Es ergeben sich so besonders geringe Anforderungen an die Toleranzen des Schiebeelements. Alternativ kann die Führungsbahn in einem geschwungenem Schlitz ausgebildet sein, in den ein Schiebelement in Form eines Zapfens greift.

Um einen sicheren Betrieb der Kinder-Sportkarre zu gewährleisten, ist die Schiebehülse bevorzugt in die Arretierstellung vorgespannt. Dadurch wird vermieden, dass die Schiebehülse unbeabsichtigt in die Faltstellung gelangt.

Gemäß einer bevorzugten Ausführungsform ist vorgesehen, dass die Schiebehülse so relativ zu dem Gestell angeordnet ist, dass sie sich in der Arretierstellung befindet, wenn in Betriebslage der Kinder-Sportkarre ein Schubstangenwinkel zwischen der Schubstange und einer Horizontalen größer ist als ein vorgegebener Faltwinkel. Der Faltwinkel kann beispielsweise 0° betragen. Der Faltwinkel ist damit derjenige Winkel zwischen der Horizontalen und der Schubstange, bei dessen Unterschreiten die Schiebehülse in die Faltstellung gelangt Der Faltwinkel wird von der Schubstange zur Horizontalen gemessen. Befindet sich die Schubstange oberhalb der Horizontalen, wie es beim normalen Betrieb der Kinder-Sportkarre üblich ist, so ist der Faltwinkel damit stets größer als 0° und kleiner oder gleich 90°. Ein Winkel von unter 0°, beispielsweise von unter -35° bedeutet, dass die Schubstange unter die Horizontale geschwenkt worden ist.

Eine besonders intuitive Bedienung ergibt sich, wenn der Faltwinkel im Wesentlichen einem Vorderrahmenwinkel, unter dem Vorderrahmen gegenüber der Horizontalen verläuft und/oder einem Hinterrahmenwinkel, unter dem der Hinterahmen gegenüber der Horizontalen verläuft, entspricht. In diesem Fall kommt die Schiebehülse genau dann in Fallstellung, wenn die Schubstange im Wesentlich parallel zu dem Vorderrahmen bzw. dem Hinterrahmen verläuft.

Wenn der Schubstangenwinkel kleiner ist als der Faltwinkel, befindet sich die Schiebehülse bevorzugt in der Faltstellung, so dass der Vorderrahmen und der Hinterrahmen relativ zueinander verschwenkbar und die Kinder-Sportkarre so in eine Platz sparendere Anordnung bringbar ist.

Gemäß einer bevorzugten Ausführungsform ist das Zentralelement über ein Vorderrahmenkopfelement mit dem Vorrahmen verbunden, mit dem Hinterrahmen über ein Hinterrahmenkopfelement verbunden und mit der Schubstange über ein Schubstangenkopfelement verbunden, wobei das Vorderrahmenkopfelement, das Hinterrahmenkopfelement, das Schubstangenkopfelement und die Schiebehülse koaxial um die zentralwelle drehbar gelagert sind und das Schiebelement an dem Schubstangenkopfelement ausgebildet ist. So kann durch Schwenken der Schubstange das Falten ausgelöst werden Bevorzugt sind das Vorderrahmenkopfelement, das Hinterrahmenkopfelement und das Schubstangenkopfelement bezüglich der Zentralwelle nebeneinander angeordnet.

Eine besonders einfache Möglichkeit, die Schubstange in einen anderen Schubstangenwinkel zu bringen, ist, dass das Schubstangenkopfelement eine Stellscheibe, die durch das Betätigungselement betätigbar ist, und mindestens ein Riegelelement, das zum verriegelndem Eingreifen in mindestens eine Riegeltasche der Schiebehülse vorgespannt ist, umfasst, wobei die Stellscheibe, die Schiebehülse und das Riegelelement so ausgebildet sind, dass ein Betätigen des Betätigungselements das Riegelelement außer Eingriff aus der Riegeltasche bringt, so dass die Schubstange relativ zu dem Gestell schwenkbar ist.

Wird in diesem Fall das Betätigungselement aus einer Ruhestellung, in die es vorgespannt sein kann, in eine Lösestellung gebracht, so kommen Riegelhülse und Riegelelement außer Eingriff und die Schubstange kann verschwenkt werden, bis das Riegelelement in die benachbarte Riegeltasche einschnappt. Wird das Betätigungselement dauerhaft in der Lösestellung gehalten, kann ein beliebiger Schubstangenwinkel eingestellt werden. Wird dann das Betätigungselement losgelassen, so schnappt die Schubstange in die nächstgelegene vorgegebene Schubstangenwinkelstellung ein.

Im Folgenden wird eine Ausführungsform der vorliegenden Erfindung anhand der beigefügten Zeichnungen näher erläutert. Dabei zeigt
- Figur 1: eine perspektivische Ansicht einer erfindungsgemäßen Kinder-Sportkarre ohne Sitz,
- Figur 2: eine perspektivische Ansicht eines Zentralelements der Kinder-Sportkarre gemäß Figur 1,
- Figur 3: eine Explosionsansicht des Zentralelements nach Figur 2,
- Figur 4a: eine Draufsicht auf ein Schubstangenkopfelement des Zentralelements gemäß den Figuren 2 und 3 in einer Ruhestellung,
- Figur 4b: eine Draufsicht auf das Schubstangenkopfelement aus Figur 4a von der Rückseite der Ruhestellung, und
- Figur 4c: eine Ansicht auf das Schubstangenkopfelement nach Figur 4a in einer Lösestellung, und
- Figur 4d: das Schubstangenkopfelement in der Ansicht nach Figur 4b in der Lösestellung.
- Figur 5: zeigt das Schubstangenkopfelement von der Seite wie in den Figuren 4a und 4c in einer perspektivischen Ansicht,
- Figur 6: zeigt das Schubstangenkopfelement von der Seite wie in den Figuren 4b und 4d in einer perspektivischen Ansicht,
- Figur 7: zeigt das Schubstangenkopfelement gemäß Figur 6 mit entfernter Stellscheibe und entfernten Riegelelementen, wobei zwei Schiebelemente zu erkennen sind,

- Figur 8: zeigt eine perspektivische Seitenansicht einer Schiebehülse des Zentralelements nach Figur 3,
- Figur 9: zeigt eine schematische Darstellung des Zusammenwirkens einer Führungsbahn der Schiebehülse und einem Schiebeelement des Schubstangenkopfelements und
- Figur 10: einen Querschnitt durch das Zentralelement gemäß Figur 3.

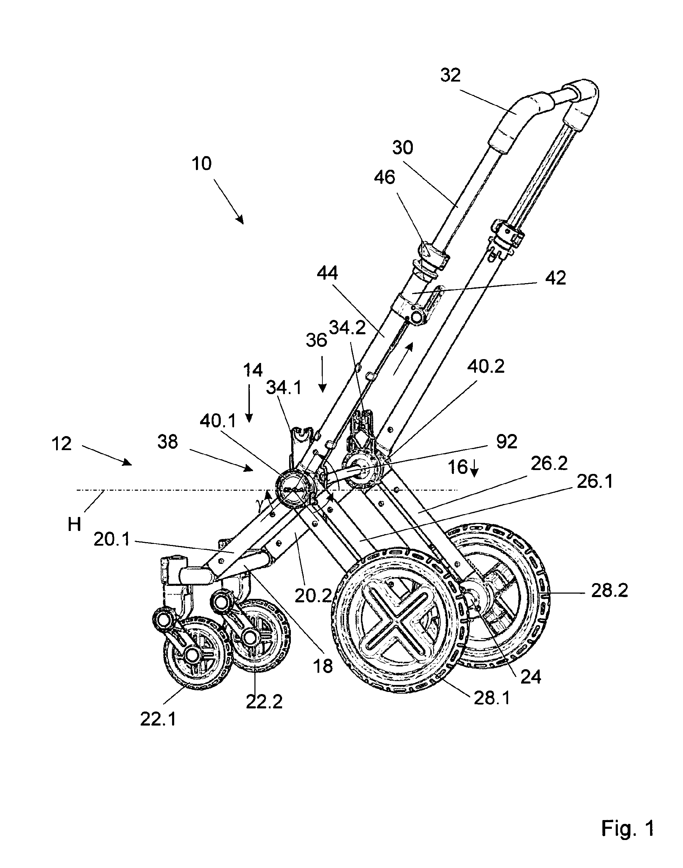

Figur 1 zeigt eine Kinder-Sportkarre 10, die ein Gestell 12 besitzt, das seinerseits einen Vorderrahmen 14 und einen Hinterrahmen 16 umfasst. Der Vorderrahmen 14 umfasst einen Vorderrahmen-Querholm 18 und zwei Vorderrahmen-Seitsnholme 20.1, 20.2, die an dem Vorderrahmen-Querholm 18 seitlich befestigt sind, sowie zwei Vorderräder 22.1, 22.2.

Der Hinterrahmen 16 umfasst einen Hinterrahmen-Querholm 24, der an zwei Hinterrahmen-Längsholmen 26.1, 26.2 befestigt ist und an dem zwei Hinterräder 28.1, 28.2 aufgehängt sind. Der Vorderrahmen-Querholm 18 ist kürzer als der Hinterrahmen-Querholm 24, so dass die beiden Vorderräder 22 zwischen die Hinterräder 28 geschwenkt werden können. Bezugszeichen ohne Zählsuffix bezeichnen stets das jeweilige Objekt im Allgemeinen.

Die Kinder-Sportkarre 10 umfasst zudem eine Schubstange 30, an der ein Griff 32 vorgesehen ist und die zum Schieben dient. Die Kinder-Sportkarre 10 besitzt zudem Sitzaufnahmeelemente 34.1, 34.2, die gemeinsam Teil einer Sitzaufnahme 36 sind, die ausgebildet ist, um einen nicht eingezeichneten Sitz aufzunehmen und zu tragen.

Benachbart zur Sitzaufnahme 36 ist ein Zentralelement 38 angeordnet, dass das Gestell 12, die Sitzaufnahme 36 und die Schubstange 30 miteinander verbindet. Das Zentralelement 38 umfasst ein erstes Gelenk 40.1 und ein zweites Gelenk 40.2, die jeweils mit einem Vorderrahmen-Längsholm 20, einem Hinterrahmen-Längsholm 26, einem Sitzaufnahmeelement 34 und der Schubstange 30 verbunden sind. Das erste Gelenk 40.1 und das zweite Gelenk 40.2 sind bezüglich der mit dem Suffix ".1" gekennzeichneten Bestandteilen gleich aufgebaut, beispielsweise spiegelsymmetrisch.

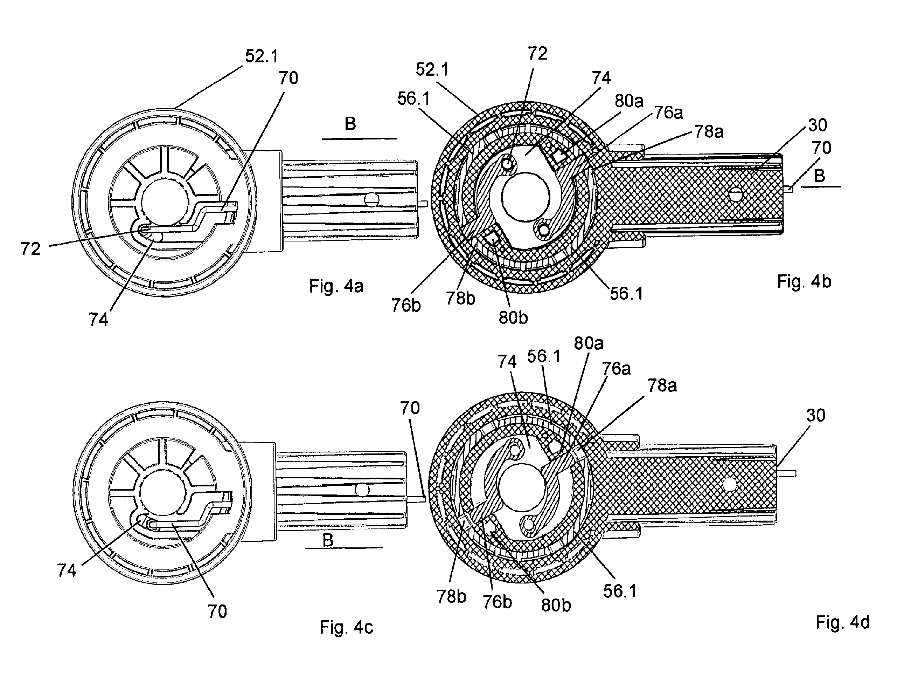

Das erste Gelenk 40.1 umfasst ein Betätigungselement 42, das einen Fingergriff 46 und eine in Figur 1 nicht sichtbare, mit dem Fingergriff 46 verbundene Betätigungsstange aufweist. Durch Ziehen an dem Fingergriff 46 bewegt sich die Betätigungsstange (Bezugszeichen 70, siehe Figuren 4a bis 4d weiter unten) in eine Betätigungsrichtung B auf den Griff 32 zu

Die Schubstange 30 bildet mit einer Horizontale H in Betriebsstellung der Kinder-sportkarre 10 einen Schubstangenwinkel α. Der Schubstangenwinkel α ist größer als null, wenn sich die Schubstange 30 oberhalb der Horizontalen H befindet und ist ansonsten negativ. Die Hinterrahmen-Längsholme 26 bilden einen Hinterrahmenwinkel β von 45° mit der Horizontalen H, der einem Vorderrahmenwinkel γ entspricht, den die Vorrahmen-Längsholme 20 mit der Horizontalen H bilden.

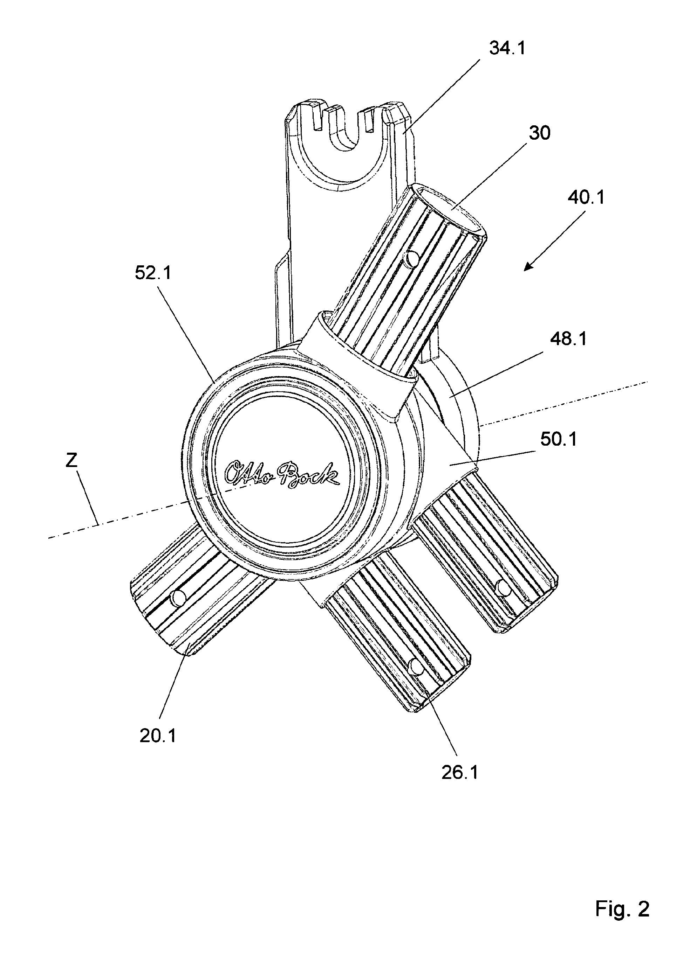

Figur 2 zeigt eine perspektivische Ansicht des ersten Gelenks 40.1. Es ist zu erkennen, dass der Vorderrahmen-Längsholm 20.1 in ein Vorderrahmenkopfelement 48.1 ausläuft, das im Wesentlichen scheibenförmig ist. Auf gleiche Weise läuft der Hinterrahmen-Längsholm. 26.1 in ein Hinterrahmenkopfelement 50.1 aus, das ebenfalls scheibenförmig ausgebildet ist und zusammen mit dem Vorderrahmenkopfelement 48.1 um eine Zentralachse Z drehbar ist. Die Schubstange 30 läuft in ein ebenfalls scheibenförmiges Schubstangenkopfelement 52.1 aus, das benachbart zu dem Vorderrahmenkopfelement 48.1 und dem Hinterrahmenkopfelement 50.1 angeordnet ist. Das zweite Gelenk 40.2 (Figur 1) ist spiegelsymmetrisch ausgebaut, wobei die jeweiligen Bestandteile das Suffix ".2" tragen.

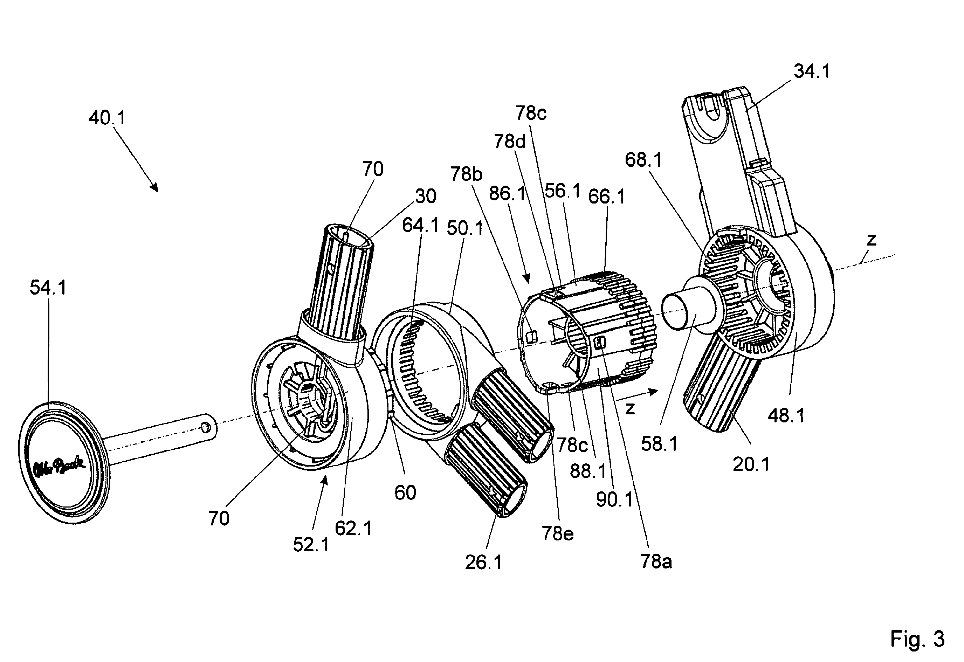

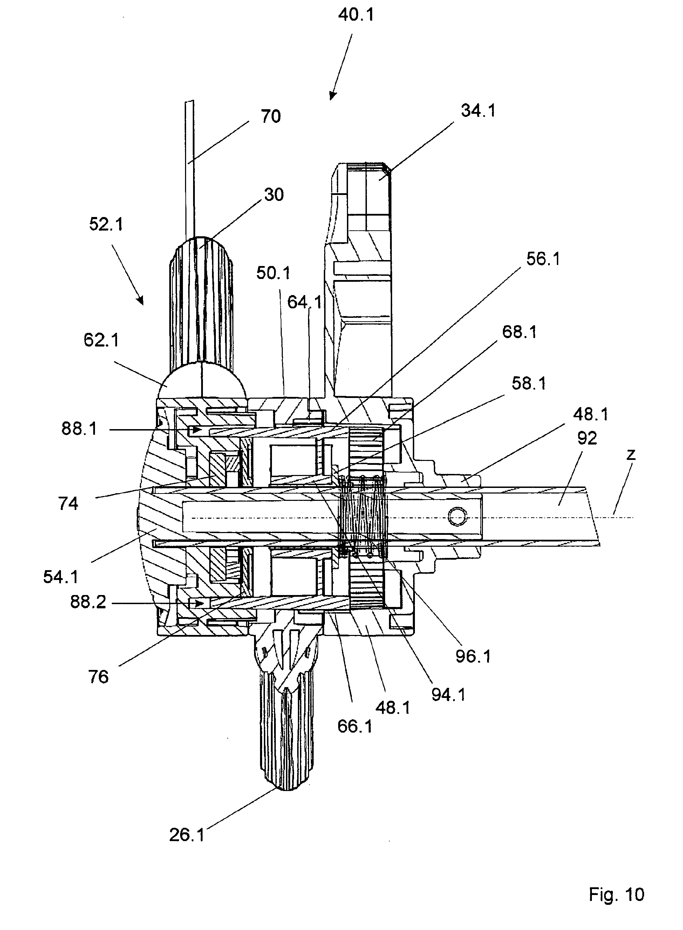

Figur 3 zeigt eine Explosionsansicht des ersten Gelenks 40.1, das neben den oben beschriebenen Komponenten eine Kappe 54.1, eine Schiebehülse 56.1 und ein Spannelement 58.1 umfasst. Das Spannelement 58.1 kann auch als Gleithülse bezeichnet werden und dient unter Anderem dazu, die Reibung zwischen der Schiebehülse 56.1, in die es eingeschoben ist, und einer in Figur 3 nicht gezeigten Zentralwelle (Bezugszeichen 92, siehe Figur 10) zu vermindern.

Das Schubstangenkopfelement 52.1 besitzt einen Vorsprünge aufweisenden Koppelabschnitt 60, der mit nicht eingezeichneten Ausnehmungen in dem Hinterrahmenkopfelement 50.1 formschlüssig so zusammenwirkt, dass der Koppelabschnitt 60 mit dem Hinterrahmenkopfelement 50.1 verbunden ist. Die Koppelabschnitt 60 ist einstückig an einem Grundkörper 62.1 des Schubstangenkopfelements 52.1 angeformt.

Das Hinterrahmenkopfelement 50.1 besitzt eine Innenrippung 64.1, die ausgebildet ist, um mit einer Außen-Rippung 66.1 der Schiebehülse 56.1 zusammenzuwirken. Die Innenrippung 64.1 des Hinterrahmenkopfelements 50.1 entspricht zudem einer Innenrippung 68.1 des Vorderrahmenkopfelements 48.1. In einer Arretierstellung ragt die Schiebehülse 56.1 mit ihrer Außenrippung 66.1 je zur Hälfte in die Innenrippungen 64.1 bzw. 68.1, so dass das Hinterrahmenkopfelement 50.1 drehfest mit dem Vorderrahmenkopfelement 48 verbunden ist. In einer Faltstellung ragt die Außenrippung 66 hingegen vollständig in die Innenrippung 68.1 des Vorderrahmenkapfelements 48 hinein, nicht aber in die Innen-Rippung 64.1, so dass das Hinterrahmenkopfelement 50.1 drehbar ist.

In den Figuren 4a bis 4c wird der Mechanismus erläutert, mit dem der Schubstangenwinkel α verändert werden kann.

Figur 4a zeigt eine Ansicht auf das Schubstangenkopfelement 52.1 in einer Ansicht von links bezüglich der Ansicht von Figur 3. In Figur 4a ist eine Betätigungsstange 70 zu sehen, die mit dem in Figur 4a nicht gezeigten Fingergriff 46 (vgl. Figur 1) verbunden ist. Durch Ziehen an dem Fingergriff 46 wird die Betätigungsstange 70 in die Betätigungsrichtung B gezogen. Mit einem dem Fingergriff 46 (vgl. Figur 1) abgewandten Koppelende 72 greift die Betätigungsstange 70 in eine in Figur 4a größtenteils verdeckte Stellscheibe 74. Bewegt sich die Betätigungsstange 70 in Betätigungsrichtung B, so dreht sich in Figur 4a die Stellscheibe 74 entgegen dem Uhrzeigersinn. In Figur 4a ist die Betätigungsstange 70 in einer Ruhestellung gezeigt, in die sie über eine nicht eingezeichnete Feder vorgespannt ist.

Figur 4b zeigt eine Ansicht von der Rückseite auf das Schubstangenkopfelement 52.1 gemäß Figur 4a. Wird die Betätigungsstange 70 in Betätigungsrichtung B gezogen, so dreht sich die Stellscheibe 74 in Figur 4b im Uhrzeigersinn. An der Stellscheibe 74 sind zwei Riegelelemente 76a, 76b befestigt, die in der in Figur 4b gezeigten Ruhestellung in jeweils eine Riegeltasche 78a bzw. 78b in der Schiebehülse 56.1 eingreift Da die Riegelelemente 76a, 76b von zugeordneten Führungen 80a, 80b geführt sind, die an dem Grundkörper 62.1 (vgl. Figur 3) ausgebildet sind, wird so eine Drehung der Schiebehülse 56.1 relativ zum Grundkörper 62.1 (vgl. Figur 3) des Schubstangenkopfelements 52.1 verhindert.

Figur 4c zeigt den Fall, in dem die Betätigungsstange 70 in Betätigungsrichtung B gezogen worden ist. Dadurch hat sich die Stellscheibe 74 gegen den Uhrzeigersinn gedreht.

Figur 4d zeigt, dass dadurch die Riegelelemente 76a, 76b radial nach innen verschoben wurden, so dass sie zwar weiterhin an den zugeordneten Führungen 80a, 80b anliegt, jedoch außer Eingriff mit den Riegeltaschen 78a, 78b der Schiebehülse 56.1 sind. In dieser Situation kann die Schubstange 30 relativ zu den übrigen Elementen des ersten Gelenks 40.1 (vgl. Figur 3) geschwenkt werden.

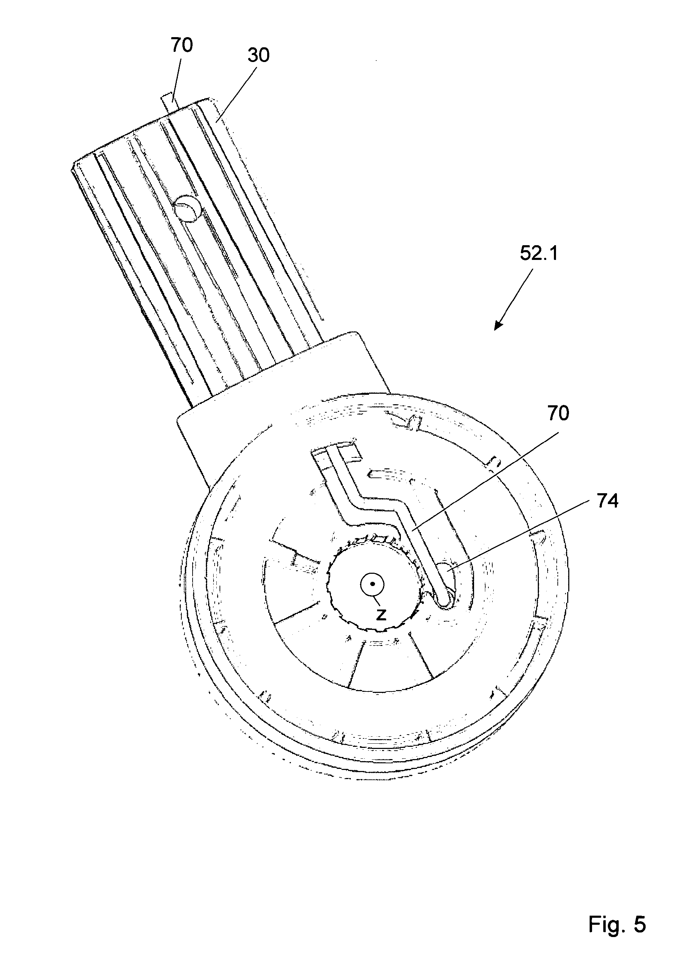

Figur 5 zeigt das Schubstangenkopfelement 52.1 in einer perspektivischen Ansicht im Zustand gemäß Figur 4a.

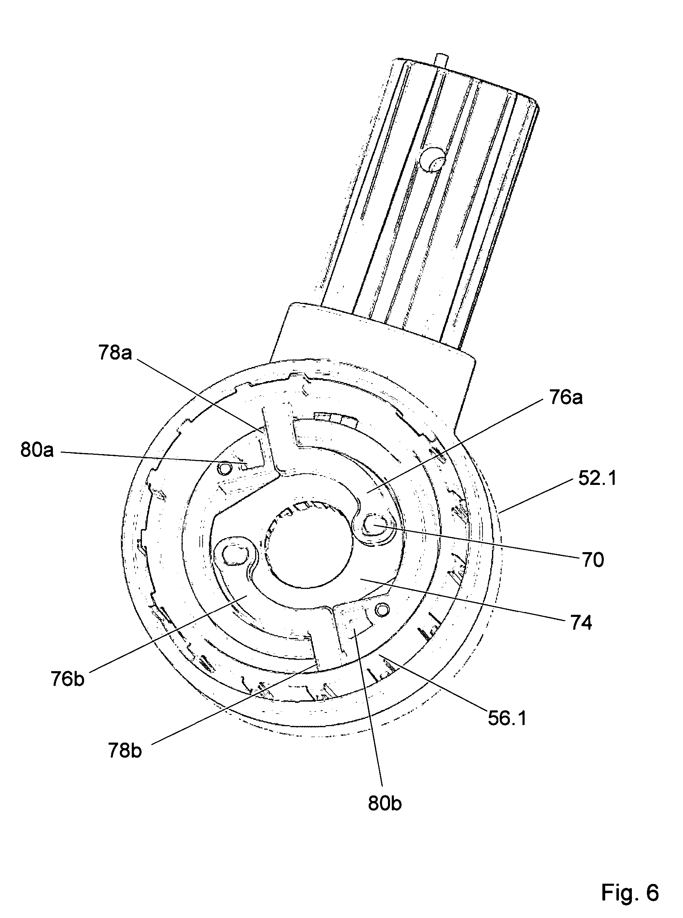

Figur 6 zeigt eine perspektivische Ansicht des Schubstangenkopfelements 52.1 in einer perspektivischen Ansicht in der Stellung gemäß Figur 4b.

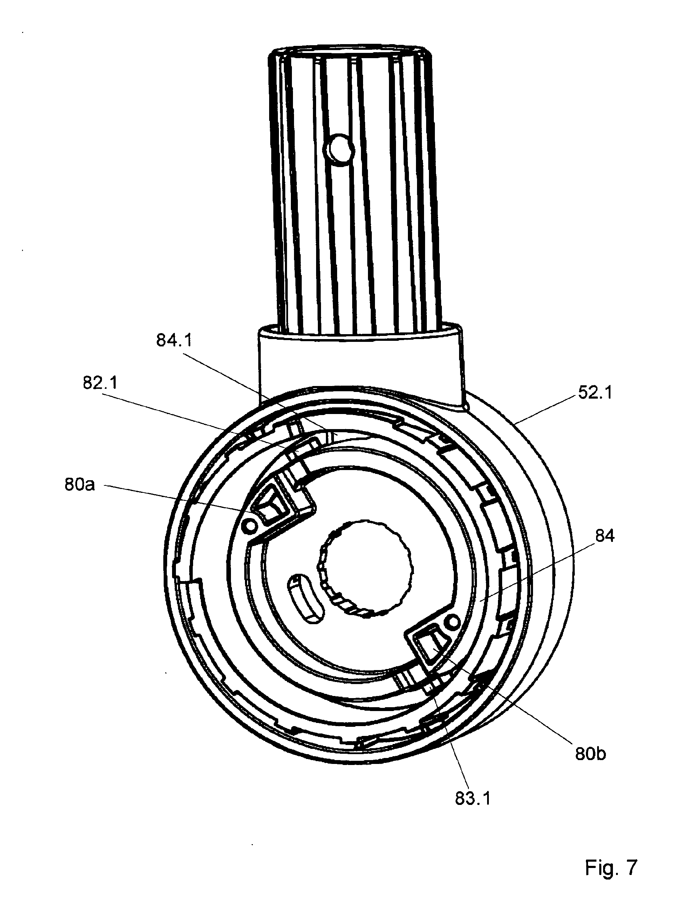

Figur 7 zeigt eine weitere Ansicht des Schubstangenkopfelements 52.2, in der zwei Schiebeelemente 82.1, 83.1 zu erkennen sind. Die Schiebeelemente 82 sind an den Grundkörper 62.1 in einer kreisförmig umlaufenden Nut 84.1 angeordnet, die so ausgebildet ist, dass die Schiebehülse 56.1 (Figur 3) mit einer Stirnseite 86.1 in sie eindringen kann. Dabei gelangt eine in Figur 3 zu sehende Führungsbahn 88.1, die an der Stirnseite 86.1 der Schiebehülse 56.1 ausgebildet ist, in Kontakt mit den Schiebeelementen 82.1, 83.1.

Werden die Schiebeelemente 82.1, 83.1 relativ zu der Schiebehülse 56.1 gedreht, so gleiten die Führungsbahn 88.1 einerseits und die Schiebeelemente 82.1, 83.1 andererseits aneinander ab und es kommt zu einer axialen Verschiebung entlang der Zentralachse Z (Figur 3) der Schiebehülse 56.1 relativ zum Schubstangenkopfelement 52.1.

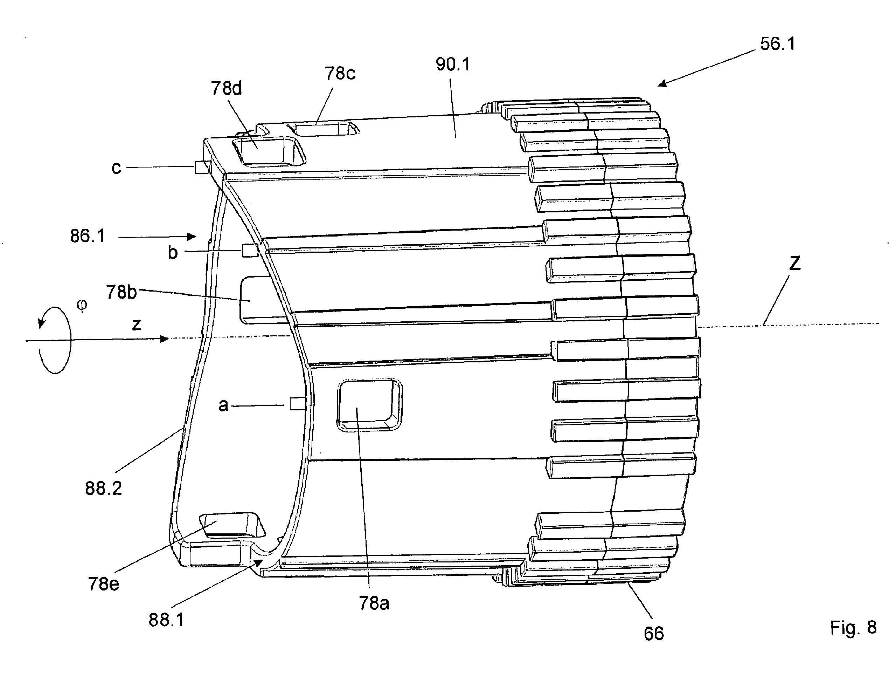

Figur 8 zeigt die Schiebehülse 56.1 mit der Führungsbahn 88. Die Führungsbahn 88 kann als Führungsbahn-Funktion z(ϕ) beschrieben werden, wenn die Zentralachse Z als z-Achse aufgefasst wird, wie es in Figur 8 gezeigt ist. Die Schiebehülse 56.1 besitzt einen im Wesentlichen zylindermantelförmigen Grundkörper 90.1, an dessen Stirnseite 88.1 die Führungsbahn 88.1 so ausgebildet ist, dass zwei einander bezüglich der Zentralachse Z gegenüberliegende Punkte den gleichen z-Wert auf der z-Achse haben. Die Führungsbahn 88.1 weist damit zwei Abschnitte, einen ersten Abschnitt 88a und einen zweiten Abschnitt 88b auf, die bezüglich der radialen Koordinate ϕ aufeinander folgen. Im Grundkörper 90.1 sind zudem die Riegeltaschen 78a, 78b,...78e ausgebildet.

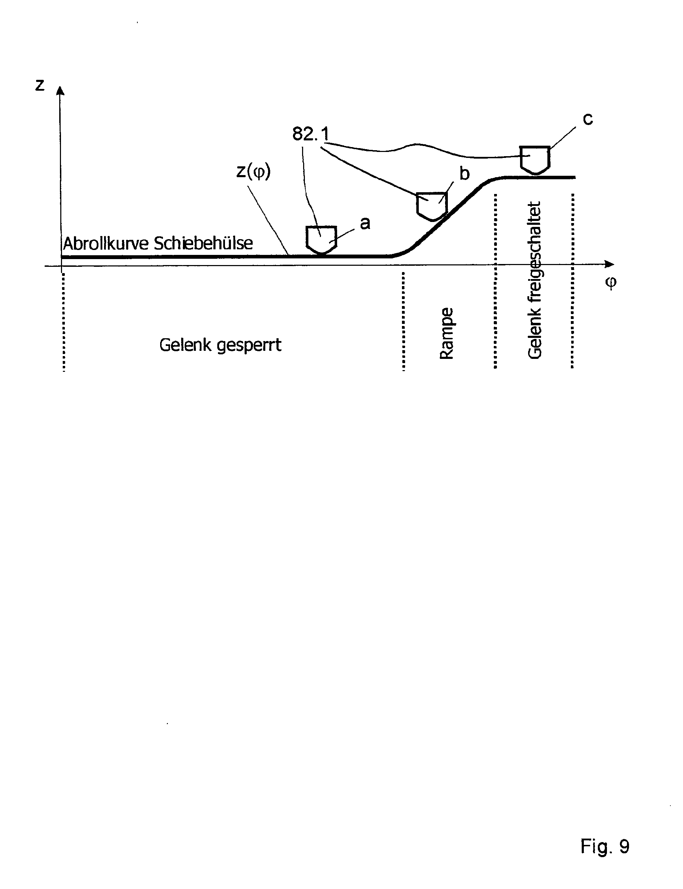

Figur 9 zeigt die Führungsbahn-Funktion z(ϕ) der Führungsbahn 88.1. Schematisch ist das Schiebeelement 82.1 (vgl. Figur 7) eingezeichnet, wenn es,sich unter drei verschiedenen Drehpositionen relativ zu der Schiebehülse 56.1 befindet. Entsprechende Positionen a, b, c sind auch in Figur 8 eingezeichnet. Es ist zu erkennen, dass das Schiebeelement 82 beim Drehen der Schiebehülse 56.1 auf der Führungsbahn 88.1 abgleitet.

Figur 10 zeigt einen Querschnitt durch das erste Gelenk 40.1 mit den auf einer Zentralwelle 92 angeordneten Komponenten. Die Schiebehülse 56.1 sitzt mit einer Zahnung 94.1 drehbar auf der Zentralwelle 92 auf und ist axial entlang der Zentralachse Z verschieblich. Eine Feder 96.1 verspannt über das Spannelement 58.1 die Schiebehülse 56.1 gegen das Vorderrahmenkopfelement 48.1, das mit der Zentralwelle 92 fest verbunden ist.

Schwenkt der Grundkörper 62.1 des Schubstangenkopfelementes 52.1 um die feststehende Zentralwelle 92, so gleiten die in Figur 10 nicht sichtbaren Schiebelemente 82.1, 83.1 (vgl. Figur 7) auf der Führungsbahn 88.1 bzw. 88.2 ab und drücken die Schiebehülse 56.1 gegen die Kraft der Feder 96.1 nach innen. Dabei ist die Außen-Rippung 66.1 der Schiebehülse 56.1 außer Eingriff mit der Innen-Rippung 64.1 des Hinterrahmenkopfelements 50.1. Das Hinterrahmenkopfelement 50.1 kann dann gegenüber dem Vorderrahmenkopfelement 48.1 verschwenkt werden. Dieser Fall tritt ein, wenn der Schübstangenwinkel α (Figur 1) kleiner ist als ein Faltwinkel α_{falt}, der hier dem Hinterrahmenwinkel β und der Vorderrahmenwinkel γ von jeweils -45° entspricht.

Ist der Schubstangenwinkel α größer als minus 45°, so ist - wie in Figur 10 gezeigtdie Schiebehülse 56.1 in der Arretierstellung, so dass ihre Außen-Rippung 66 mit der Innen-Rippung 64 des Hinterrahmenkopfelementes 50.1 und gleichzeitig mit der Innen-Rippung 68 des Vorderrahmenkopfelements 48.1 kämmt, so dass beide drehfest miteinander verbunden sind.

### Bezugszeichenliste

- 10: Kinder-Sportkarre
- 12: Gestell
- 14: Vorderrahmen
- 16: Hinterrahmen
- 18: Vorderrahmen-Querholm
- 20: Vorderrahmen-Längsholm
- 22: Vorderrad
- 24: Hinterrahmen-Querholm
- 26: Hinterrahmen-Längsholm
- 28: Hinterrad
- 30: Schubstange
- 32: Griff
- 34: Sitzaufnahmeelement
- 36: Sitzaufnahme
- 38: Zentralelement
- 40: Gelenk erstes/zweites
- 42: Betätigungselement
- 46: Fingergriff
- 48: Vorderrahmenkopfelement
- 50: Hinterrahmenkopfelement
- 52: Schubstangenkopfelement
- 54: Kappe
- 56: Schiebehülse
- 58: Spannelement
- 60: Koppelabschnitt
- 62: Grundkörper
- 64: Innen-Rippung
- 66: Außen-Rippung
- 68: Innen-Rippung
- 70: Betätigungsstange
- 72: Koppelende
- 74: Stellscheibe
- 76: Riegelelement
- 78: Riegeltasche
- 80: Führung
- 82,83: Schiebeelement
- 84: Nut
- 86: Stirnseite
- 88: Führungsbahn
- 90: Grundkörper
- 92: Zentralwelle
- 94: Verzahnung
- 96: Feder
- α: Schubstangenwinkel
- β: Hinterrahmenwinkel
- γ: Vorderrahmenwinkel
- B: Betätigungsrichtung
- Z: Zentralachse
- H: Horizontale
- z: axiale Koordinate
- ϕ: radiale Koordinate
- z(ϕ): Führungsbahn-Funktion

## Patentansprüche

1. Kinder-Sportkarre, insbesondere Kinderrehabilitations-Sportkarre, mit
(a) einem Gestell (12), das
(i) einen Vorderrahmen (14) mit mindestens einem Vorderrad (22) und
(ii) einen Hinterrahmen (16) mit mindestens einem Hinterrad (28) umfasst,
b) einer Schubstange (30) zum Schieben oder Ziehen der Sportkarre (10),
c) einer Sitzaufnahme (36) zum Aufnehmen eines Sitzes und
d) einem Zentralelement (38), das
(i) den Vorderrahmen (14), den Hinterrahmen (16) und die Schubstange (30) arretierbar verschwenkbar miteinander verbindet,
(ii) ein Betätigungselement (42) zum Lösen des Zentralelements (38) und
(iii) eine Schiebehülse (56), die
- eine Arretierstellung in der der Vorderrahmen (14) drehfest mit dem Hinterrahmen (16) verbunden ist und
- eine Faltstellung, in der der Vorderrahmen (14) relativ zum Hinterrahmen (16) schwenkbar ist, besitzt,
**dadurch gekennzeichnet, dass**
e) das Zentralelement (38) mindestens ein Schiebeelement (82, 83) aufweist und
f) die Schiebehülse (56) eine Führungsbahn (88) besitzt, die ausgebildet ist, um an dem Schiebeelement (82, 83) so abzugleiten, dass durch eine Drehung des Schiebeelements (82) relativ zu der Schiebehülse (56) um eine.Zentralwelle (92) eine axiale Verschiebung der Schiebehülse (56) von der Arretierstellung in die Faltstellung bewirkbar ist.

2. Kinder-Sportkarre nach Anspruch 1, **dadurch gekennzeichnet, dass** die Führungsbahn (88) an einem Rand der Schiebehülse (56) ausgebildet ist.

3. Kinder-Sportkarre nach Anspruch 2, **dadurch gekennzeichnet, dass** die Führungsbahn (88) an einem axial äußeren, dem Schiebeelement (82) zugewandten Rand der Schiebehülse (56) ausgebildet ist.

4. Kinder-Sportkarre nach Anspruch 3, **dadurch gekennzeichnet, dass** die Schiebehülse (56) einen im Wesentlichen zylindermantelförmigen Grundkörper (90) hat und die Führungsbahn (88) an einer Stirnseite (86) des Grundkörpers ausgebildet ist.

5. Kinder-Sportkarre nach einem der vorstehenden Ansprüche, **dadurch gekennzeichnet, dass** die Schiebehülse (56) in die Arretierstellung vorgespannt ist.

6. Kinder-Sportkarre nach einem der vorstehenden Ansprüche, **dadurch gekennzeichnet, dass** die Schiebehülse (56) so relativ zu dem Gestell (12) angeordnet ist, dass sie sich in der Arretierstellung befindet, wenn in Betriebslage der Kinder-Sportkarre (10) ein Schubstangenwinkel (α) zwischen der Schubstange (30) und einer Horizontalen (H) größer ist als ein vorgegebener Faltwinkel, wobei der Faltwinkel insbesondere -45° beträgt.

7. Kinder-Sportkarre nach einem der vorstehenden Ansprüche, **dadurch gekennzeichnet, dass** die Schiebehülse (56) so relativ zu dem Gestell (12) angeordnet ist, dass sie sich in der Faltstellung befindet, wenn der Schubstangenwinkel (α) kleiner ist als der Faltwinkel.

8. Kinder-Sportkarre nach Anspruch 6 oder 7, **dadurch gekennzeichnet, dass** der Faltwinkel im Wesentlichen einem Vorderrahmenwinkel (γ), unter dem der Vorderrahmen (14) gegenüber der Horizontalen (H) verläuft, und/oder einem Hinterrahmenwinkel (β), unter dem der Hinterrahmen (16) gegenüber der Horizontalen (H) verläuft, entspricht.

9. Kinder-Sportkarre nach einem der vorstehenden Ansprüche, **dadurch gekennzeichnet, dass** das Zentralelement (38)
- mit dem Vorderrahmen (14) über ein Vorderrahmenkopfelement (48) verbunden ist,
- mit dem Hinterrahmen (16) über ein Hinterrahmenkopfelement (50) verbunden ist,
- mit der Schubstange (30) über ein Schubstangenkopfelement (52) verbunden ist,
- wobei das Vorderrahmenkopfelement (48), das Hinterrahmenkopfelement (50), das Schubstangenkopfelement (52) und die Schiebehülse (56) koaxial um die Zentralwelle (92) drehbar gelagert sind und
- das Schiebeelement (82) an dem Schubstangenkopfelement (52) ausgebildet ist.

10. Kinder-Sportkarre nach Anspruch 9, **dadurch gekennzeichnet, dass** das Schubstangenkopfelement (52)
- eine Stellscheibe (74), die durch das Betätigungselement (42) betätigbar ist, und
- mindestens ein Riegelelement (76), das zum verriegelnden Eingreifen in mindestens eine Riegeltasche (78) der Schiebehülse (56) vorgespannt ist, umfasst,
- wobei die Stellscheibe (74) und das Riegelelement (76) so ausgebildet sind, dass ein Betätigen des Betätigungselements (42) das Riegelelement (76) außer Eingriff aus der Riegeltasche (78) bringt, so dass die Schubstange (30) relativ zu dem Gestell (12) schwenkbar ist.
